(19) Europäisches Patentamt
European Patent Office
Office européen des brevets

(11) Publication number: 0 342 862 A2

# (12) EUROPEAN PATENT APPLICATION

(21) Application number: 89304787.8

(22) Date of filing: 11.05.89

(51) Int. Cl.[4]: C08G 65/20 , C08G 65/30

(30) Priority: 19.05.88 US 195911

(43) Date of publication of application: 23.11.89 Bulletin 89/47

(84) Designated Contracting States: AT BE CH DE ES FR GB GR IT LI LU NL SE

(71) Applicant: E.I. DU PONT DE NEMOURS AND COMPANY
1007 Market Street
Wilmington Delaware 19898(US)

(72) Inventor: Dorai, Suriyanarayanan
7234 Lincoln Avenue Extension
Lockport New York 14094(US)
Inventor: Ernst, Richard Edward
292 Unionville-Lenape Road
Kennett Square Pennsylvania 19348(US)

(74) Representative: Woodcraft, David Charles et al
High Holborn House 52/54 High Holborn
London WC1V 6SE(GB)

## (54) A process for reducing fluoride levels in poly (tetramethylene ether)glycol.

(57) The present invention is directed to a process for reducing fluoride levels in PTMEG by the steps of: providing PTMEG having an undesired level of fluoride; and heating said PTMEG to a temperature above 150°C for a predetermined period of time. Most preferably, the process includes the steps of: (1) providing PTMEG having an undesired level of fluoride; (2) mixing the PTMEG with an aqueous alkali including water and lime, thereby forming a mixture; and (3) heating the mixture to a temperature between about 200°C and about 275°C for about 1 minute to about 8 hours.

EP 0 342 862 A2

# A PROCESS FOR REDUCING FLUORIDE LEVELS IN POLY(TETRAMETHYLENE ETHER) GLYCOL

## BACKGROUND OF THE INVENTION

The present invention relates to a process for reducing fluoride levels in poly(tetramethylene ether) glycol (hereinafter "PTMEG") by heating the PTMEG to a temperature above 150 °C. PTMEG is the polymerization product of tetrahydrofuran (hereinafter "THF") and is a component of certain polyester elastomers. Typically, these elastomers are the reaction product of, among other components, dimethylterephthalate and PTMEG. However, some of these elastomers are the reaction products of, among other things, terephthalic acid (hereinafter "TPA") and PTMEG. The reaction of TPA and PTMEG produces an elastomer product which often results in the generation of an undesirable amount of hydrogen fluoride. In order the reduce the HF evolution, it is necessary to start with a PTMEG which has a low concentration of fluoride.

U.S. Patent 4,371,713 discloses a process for manufacturing PTMEG comprising the steps of: polymerizing THF; under a strongly acidic condition, hydrolyzing the polymerized THF (i.e., PTMEG) after adding an aqueous alkali solution; and washing the hydrolysis product. The alkali is preferably the hydroxide or oxide of an alkali metal, but the hydroxide or oxide of an alkaline earth or ammonia may be used. The hydrolysis temperature is preferably between 50 °C and 150 °C. Moreover, if the temperature exceeds 150 °C, decomposition or deterioration of the PTMEG is disclosed as tending to take place and the depolymerizing action of the sulfuric acid and hydrofluoric acid is intensified. The hydrolysis treatment time is usually 1 to 10 hours.

U.S. Patent 3,358,042 discloses a process for recovering PTMEG from an aqueous acidic solution. The PTMEG is produced via a catalytic polymerization of THF; the preferred catalysts are hydrofluoric and sulfuric acids. The polymerization is terminated by the addition of water. The polymerization termination products, i.e., PTMEG, THF, catalyst and water, are steam-distilled until they reach a temperature of 95 °C, so that the unreacted THF is removed therefrom. A water-immiscible polymer solvent is added to the mixture produced by steam distillation, i.e., PTMEG, catalyst and water. The polymer solvents which are suitable for this step are those which, among other things, boil below 150 °C and include hydrocarbons, ethers and suitable halogenated compounds. See U.S. Patent 3,358,042, column 2, lines 28-51. The mixture of PTMEG, solvent, catalyst and some water separate into a PTMEG-solvent phase, and an aqueous phase is also separated out. A neutralizer is added to the polymer-solvent phase. The neutralizer, preferably calcium hydroxide, calcium carbonate or mixtures of the two, is added in a quantity which is in stoichiometric excess of the acid remaining in the polymer. The uncombined water and suspended solids are then removed from the PTMEG-solvent mixture. Therefore, at no time in this process is the temperature taken above 95 °C and would never be taken above 150 °C, the maximum boiling point of the solvent.

U.S. Patent 2,751,419 discloses a process for the purification of PTMEG. The PTMEG is produced via an acid-catalyzed polymerization of THF using fluosulfonic acid. This polymerization process produces esters which are converted to PTMEG by a hydrolysis reaction accomplished by drowning the reaction mass in hot water under vigorous agitation or by continuous co-current drowning in a turbannular flow tube with steam as a propellant. Unreacted THF is removed from the hydrolyzed reaction mass by steam stripping, the maximum stripping temperature is 100 °C. The THF-stripped hydrolyzed reaction mass is washed with water, preferably in a continuous countercurrent fashion and at a water to PTMEG ratio between 1:1 to 10:1, to remove a major portion of the HF and $H_2SO_4$. The remaining portion of HF and $H_2SO_4$ is neutralized by mixing the mass with an aqueous slurry of calcium hydroxide. The slurry, containing 5-15% calcium hydroxide, is mixed with the mass at a ratio of about 0.25 to 5.0 parts (preferably one part) $Ca(OH)_2$ to 100 parts PTMEG. The slurry-mass mixture temperature is approximately 80 °C. The neutralized mass is filtered to remove the calcium hydroxide and other calcium salts. The residual water in the PTMEG is removed by evaporation, and the evaporation temperature is a maximum of 145 °C.

## SUMMARY OF THE INVENTION

The present invention is directed to a process for reducing fluoride levels in PTMEG by steps of: providing PTMEG having an undesired level of fluoride; and heating said PTMEG to a temperature above 150 °C for a predetermined period of time. Most preferably, the process includes the steps of: (1) providing

PTMEG having an undesired level of fluoride; (2) mixing the PTMEG with an aqueous alkali including water and lime, thereby forming a mixture; and (3) heating the mixture to a temperature between about 200° C and about 275° C for about 1 minute to about 8 hours.

## DETAILED DESCRIPTION OF THE INVENTION

PTMEG produced by the polymerization of THF with a fluosulfonic acid catalyst typically has a fluoride concentration of between 80 to 600 ppm. The fluoride concentration refers to "end group" fluoride which is chemically bound to the PTMEG.

The fluoride reducing reaction disclosed hereinafter is believed to be, but is not limited to, a "base catalyzed hydrolysis of the fluoride end groups". The reaction mechanism is believed to be:

$$OH \sim F + H_2O \xrightarrow{Ca(OH)_2} OH \sim OH + CaF_2 + H_2O \ .$$

PTMEG having the undesired level of fluoride is preferably mixed with an aqueous alkali. However, the addition of the aqueous alkali is not always necessary as will become evident below. The mixture of PTMEG and aqueous alkali is heated to a predetermined temperature between 150° C and about 300° C for a predetermined period of time.

The aqueous alkali comprises water and an alkali selected from the group consisting of sodium hydroxide, calcium hydroxide, magnesium hydroxide, sodium carbonate, sodium borohydride, sodium formate and sodium acetate. Preferably the alkali is lime, i.e., calcium hydroxide.

The aqueous alkali further comprises between about 5% and about 50% by weight ("by weight" hereinafter refers to the total weight of the PTMEG and aqueous alkali) of water and up to about 5% by weight of alkali. Preferably the aqueous alkali comprises between about 10 and about 30% by weight water and between about 0.25 and about 0.45% by weight alkali. Alternately, the alkali concentration may range between about 0.05 and about 3.30% by weight.

The water of the aqueous alkali is extremely important to the reduction of fluoride in the PTMEG. A minimum concentration of 15% by weight is believed to be required to reduce the fluoride concentration to below 40 ppm. Generally, the higher the water concentration, at least up to about 25% by weight, the greater is the reduction in the fluoride concentration. When no water is present, fluoride reduction apparently does not take place even at a temperature of 300° C.

With regard to the alkali of the aqueous alkali, lime is preferred since it is most often used commercially to neutralize residual amounts of acid that may be present in PTMEG produced by polymerization of the THF. Moreover, lime is not known to adversely affect PTMEG. Absence of lime causes depolymerization of the PTMEG due to the generation of HF and considerably slows the fluoride reducing reaction. Increasing the lime concentration to about 0.30% by weight apparently has no significant effect on the fluoride reduction. At lower reaction temperatures, the rate controlling step is the solubilization of the lime in the water. Therefore, the reaction appears to be slow, thus requiring a longer retention time to complete the reaction.

The mixture of PTMEG and aqueous alkali is heated to a temperature of about 150° C, preferably between about 200° C and 300° C, for a period of time up to about 12 hours. Most preferably, the mixture is heated between about 240° C and 250° C for a time between about 1 minute and about 1.0 hours. Alternatively, the mixture may be heated to a temperature between about 200° C and 275° C for a time between about 1 minute and about 8 hours.

With regard to the temperature and time, a temperature in excess of about 225° C is apparently required to complete the reaction in a reasonable amount of time because fluoride end groups are very stable and are difficult to remove. Under agitated conditions (discussed below), the fluoride concentration (about 225 ppm) of PTMEG can be reduced to less than 40 ppm (when lime concentration of about 0.35% by weight and water concentration of about 25% by weight) by controlling the temperature and time as follows:

| Temperature (°C) | Retention Time (Hours) |
|---|---|
| 200 | 7.00 |
| 225 | 4.00 |
| 235 | 3.00 |
| 250 | 0.50 |
| 275 | 0.00* |

* heating the reactants to 275° followed by immediate cooling.

Agitation of the reactants during heating is preferred because the greater the agitation, the greater the rate of fluoride reduction.

After the fluoride reduction reaction is completed, the product is dried at about 120°C under vacuum of about 5-10 mm of Hg for about 2 hours. The suspended solids are removed by filtration.

With regard to the equipment necessary for the process, a jacketed, agitated, pressure vessel is preferred. The vessel preferably has a maximum temperature rating of about 500°F and a maximum pressure rating of 900 psig. Also, the vessel should be provided with a nitrogen purge system, as it is preferred that the fluoride reduction reaction be performed in an inert atmosphere, as oxygen will color the product. Oxygen does not have an effect on the fluoride reduction.

The following Examples further support the invention disclosed herein, but are not to be considered limiting on the invention.

In the following experimental tests, PTMEG having 200 ppm fluoride was used. In each test, the PTMEG, water and alkali was charged into a high pressure shaker tube. The contents of the tube was sparged with nitrogen to remove $O_2$ and heated for the specified length of time under autogenous pressure. The polymer was decanted from the water layer, dried at 120°C under vacuum and then filtered.

| % Water | Base | % Base | Time(hr) | Temp.(°C) | Finish ppm F |
|---|---|---|---|---|---|
| 25 | $Ca(OH)_2$ | 3.8 | 2 | 300 | 25 |
| 25 | NaOH | 0.8 | 2 | 300 | 18 |
| 25 | None | 0.0 | 2 | 300 | 19 |
| 25 | $Ca(OH)_2$ | 3.8 | 2 | 200 | 160 |
| 25 | NaOH | 0.8 | 2 | 200 | 93 |
| 25 | None | 0.0 | 2 | 200 | 176 |
| 25 | $Ca(OH)_2$ | 0.4 | 4 | 200 | 81 |
| 25 | $Ca(OH)_2$ | 0.4 | 2 | 225 | 113 |
| 25 | $Ca(OH)_2$ | 3.0 | 4 | 250 | 10 |
| 25 | $Ca(OH)_2$ | 1.0 | 4 | 225 | 9 |
| 5 | $Ca(OH)_2$ | 3.0 | 4 | 225 | 200 |

The following is a tabulation of a set of experiments wherein the reaction was carried on without agitation. The fluoride values (F start and F finish) are in "ppm".

| % Lime | % Water | Time(hr) | Temp.(°C) | F Start | F Finish |
|---|---|---|---|---|---|
| 3.33 | 33 | 12 | 225 | 238 | 16 |
| 3.33 | 33 | 8 | 225 | 238 | 16 |
| 3.00 | 50 | 4 | 225 | 238 | 40 |
| 4.00 | 33 | 8 | 225 | 238 | 18 |
| 3.33 | 25 | 6 | 225 | 238 | 27 |
| 3.33 | 33 | 6 | 225 | 210 | 35 |
| 0.33 | 25 | 4 | 225 | 238 | 88 |
| 0.33 | 25 | 4 | 150 | 238 | 234 |
| 0.33 | 25 | 2 | 175 | 238 | 229 |
| 0.33 | 25 | 2 | 150 | 238 | 250 |
| 0.33 | 25 | 6 | 225 | 238 | 81 |
| 0.33 | 25 | 4 | 200 | 238 | 189 |
| 0.33 | 25 | 4 | 175 | 238 | 229 |
| 0.33 | 25 | 8 | 150 | 238 | 218 |
| 5.00 | 25 | 3 | 175 | 238 | 222 |
| 5.00 | 25 | 3 | 225 | 238 | 165 |
| 3.33 | 25 | 4 | 225 | 238 | 91 |
| 3.33 | 25 | 2 | 225 | 238 | 118 |
| 3.33 | 25 | 2 | 250 | 238 | 73 |
| $NaBH_4$ 1.80 | 9 | 0.33 | 125 | 326 | 214 |
| $Na_2CO_3$ 1.80 | 9 | 0.33 | 120 | 326 | 308 |
| NaFormate 1.80 | 9.6 | 0.33 | 120 | 326 | 305 |
| NaAc 1.80 | 8.9 | 0.33 | 125 | 326 | 307 |

The present invention may be embodied in other specific forms without departing from the spirit or essential attributes thereof and, accordingly, reference should be made to the appended claims, rather than to the foregoing specification, as indicating the scope of the invention.

## Claims

1. A process for reducing fluoride levels in poly(tetramethylene ether) glycol (PTMEG) comprising the steps of
providing PTMEG having an undesired level of fluoride; and
heating said PTMEG to a temperature above 150°C for a predetermined period of time.

2. The process according to claim 1 further comprising:
adding an aqueous alkali to said PTMEG having said undesired level of fluoride thereby forming a mixture and thereafter heating said mixture.

3. The process according to claim 1 or 2 wherein said PTMEG includes water.

4. The process according to claim 1 wherein said PTMEG is heated to a temperature between about 200°C and about 300°C.

5. The process according to claim 1 wherein said PTMEG is heated to a temperature between about 200°C and about 275°C.

6. The process according to claim 1 wherein said PTMEG is heated to a temperature between about 240°C and about 250°C.

7. The process according to claim 1 wherein said predetermined time is up to 12 hours.

8. The process according to claim 1 or 5 wherein said predetermined time being between about 1 minute and about 8 hours.

9. The process according to claim 1 or 6 wherein said predetermined time being between about 1 minute and 1 hour.

10. The process according to claim 2 wherein said aqueous alkali comprises water and an alkali selected from the group consisting of sodium hydroxide, calcium hydroxide (lime), magnesium hydroxide, sodium carbonate, sodium borohydride, sodium formate and sodium acetate.

11. The process according to claim 2 wherein said aqueous alkali comprises between about 5% and about 50% by weight water and up to about 5% by weight alkali.

12. The process according to claim 2 wherein said aqueous alkali comprises between about 10% and about 30% by weight water and between about 0.25% and 0.45% by weight alkali.

13. The process according to claim 2 wherein said aqueous alkali comprises between about 0.05% and about 3.30% by weight alkali.

14. The process according to claim 1 wherein during heating said PTMEG is agitated.